# EUROPÄISCHE PATENTSCHRIFT

(11) **EP 0 847 566 B1**
(45) Veröffentlichungstag und Bekanntmachung des Hinweises auf die Patenterteilung: **17.03.1999**
(21) Anmeldenummer: 96934380.5
(22) Anmeldetag: 22.08.1996
(51) Int. Cl.: G06F 17/30

(54) **DATENBANKSYSTEM ZUR VERWALTUNG VON ARRAYS**
ARRAY-MANAGEMENT DATA-BASE SYSTEM
SYSTEME DE BANQUE DE DONNEES POUR LA GESTION DE MATRICES

(30) Priorität: 30.08.1995 DE 19531809; 30.05.1996 DE 19621788
(43) Veröffentlichungstag der Anmeldung: 17.06.1998
(73) Patentinhaber: Baumann, Peter, 81735 München (DE)
(72) Erfinder: Baumann, Peter, D-81735 München (DE)
(74) Vertreter: Hössle, Markus, Dipl.-Phys.
(86) Internationale Anmeldenummer: DE9601583
(87) Internationale Veröffentlichungsnummer: WO9708661

(56) Entgegenhaltungen:
- ADVANCES IN SPATIAL DATABASES. THIRD INTERNATIONAL SYMPOSIUM, SSD '93 PROCEEDINGS, PROCEEDINGS OF SYMPOSIUM ON LARGE SPATIAL DATABASES (SSD'93), SINGAPORE, 23-25 JUNE 1993, ISBN 3-540-56869-7, 1993, BERLIN, GERMANY, SPRINGER-VERLAG, GERMANY, Seiten 191-206, XP000617280 BAUMANN P: "Database support for multidimensional discrete data"

## Beschreibung

### 1 Zusammenfassung der Erfindung

Die Erfindung bezieht sich auf ein anwendungsneutrales Datenbanksystem (DBS) zur Speicherung, Wiedergewinnung und Manipulation von Rasterdaten, d.h. Arrays beliebiger (fester oder variabler) Größe und Dimension über beliebigen Array-Basistypen. Die Erfindung ist charakterisiert durch die strikte Trennung von logischer (konzeptueller) und physischer Ebene, um Datenunabhängigkeit zu erreichen, also die Möglichkeit, Rasterdaten unabhängig von ihrer physischen Ablagestruktur, Codierung und Kompression anzusprechen. Abhängig von dem Datenformat, das die Applikation anfordert, nimmt das DBS transparent unter Berücksichtigung von Aspekten der Zugriffs- und Übertragungsoptimierung die erforderliche Umwandlung und (De-) Kompression vor.

Auf der konzeptuellen Ebene vermittelt die explizite Definition von Arraystrukturen über eine Datendefinitionssprache (DDL) dem DBS das Wissen über die vollständige Array-Semantik. Eine orthogonale Anfragesprache (DML) enthält Array-spezifische Primitive sowie Operatoren, die beliebig kombiniert werden können, um optimierbare DML-Ausdrücke und -Prädikate zu formulieren. Standardfunktionen gestatten die explizite Formatumwandlung.

Auf der physischen Ebene erlaubt eine Speicherarchitektur, die auf der Kombination von Array-Kachelung und einer räumlichen Zugriffsstruktur (Geo-Index) beruht, den effizienten Zugriff auf Arrays und Teilarrays sowie die Verteilung von Arrays über mehrere, unter Umständen heterogene Speichermedien.

Die Erfindung eignet sich vor allem für Rasterapplikationen mit hohen Anforderungen hinsichtlich Funktionalität, Datenvolumen, Netzwerkfähigkeit und Zugriffszeit - insbesondere verteilte, offene Multimediasysteme.

### 2 Technischer Hintergrund der Erfindung

### 2.1 Technisches Gebiet, auf das sich die Erfindung bezieht

Die vorliegende Erfindung bezieht sich auf ein anwendungsneutrales Datenbanksystem (DBS) zur Speicherung, Wiedergewinnung und Manipulation von beliebigen Arrays in Datenbanken. Der Begriff *Array* wird in diesem Zusammenhang in einem programmiersprachlichen Sinn verstanden: Eine Sequenz fester oder variabler Länge von gleichartig strukturierten Datenelementen *(Zellen;* in den Bereichen Computergraphik und Bildverarbeitung oft als *Pixel* bezeichnet), die über ihre (ganzzahligen) Positionsnummern adressiert werden. Die Zellen selbst können selbst wieder Arrays sein, sodaß sich Arrays beliebiger Dimension konstruieren lassen.

### 2.2 Einschlägiger Stand der Technik mit Fundstellen

DBSe haben eine beträchtliche Tradition und spielen ein wichtige Rolle in der Speicherung, Wiedergewinnung und Manipulation großer Datenmengen. Dazu bieten sie Mittel für flexiblen Datenzugriff, Integritäts- und Konsistenzverwaltung, Mehrbenutzerverwaltung, Anfrage-und Speicheroptimierung, Backup und Recovery etc. Zur Kommunikation zwischen Datenbankanwendung *(Client)* und dem Datenbankprogramm *(Server)* existieren diverse Techniken, die z.B. über Funktionsbibliotheken *(Application Programmer*'*s Interface,* API), die an die Anwendung gebunden werden, eine für die Anwendung unsichtbare Netzwerk-Datenkommunikation einschließlich Datenkonversion vornehmen.

Allerdings sind diese Vorteile bisher nur für Datenelemente wie ganze Zahlen und Strings sowie seit einiger Zeit für sogenannte lange Felder oder Blobs (binary large objects), also variabel lange Byteketten, verfügbar. Allgemeine Rasterdaten (z.B. Audio (1D), Rasterbilder (2D) und Video (3D) werden gemäß gängiger Praxis als Bitketten betrachtet und auf lineare Blobs abgebildet; beispielsweise konstatieren in [MwLW-89] die Autoren zuerst *"die Bild-Rohdaten bilden eine Pixelmatrix",* um dann fortzufahren *"die Rohdaten erscheinen [in der Datenbank] einfach als ein Bitstring".*

Aufgrund des Semantikverlusts durch die FORTRAN-artige Linearisierung in der Datenbank können Rasterdaten nur als Ganzes oder zeilenweise gelesen und geschrieben werden. Rasterstrukturen können nicht in Suchkriterien angegeben werden und können auch nicht durch das DBS bearbeitet werden, um etwa relevante Ausschnitte zu extrahieren. Darüberhinaus muß sich die Anwendung auf eines aus der Vielzahl existierender Datenformate zur Codierung und Kompression festlegen. Diese Wahl ist für auch alle anderen Datenbank-Applikationen verbindlich, die darauf zugreifen, und ihnen allein obliegt die korrekte Decodierung und Dekompression. Dem Datenbank-Anwendungsprogrammierer wird damit eine Vielzahl von maschinennahen, sich wiederholenden, fehleranfälligen und zeitraubenden Programmieraufgaben aufgebürdet.

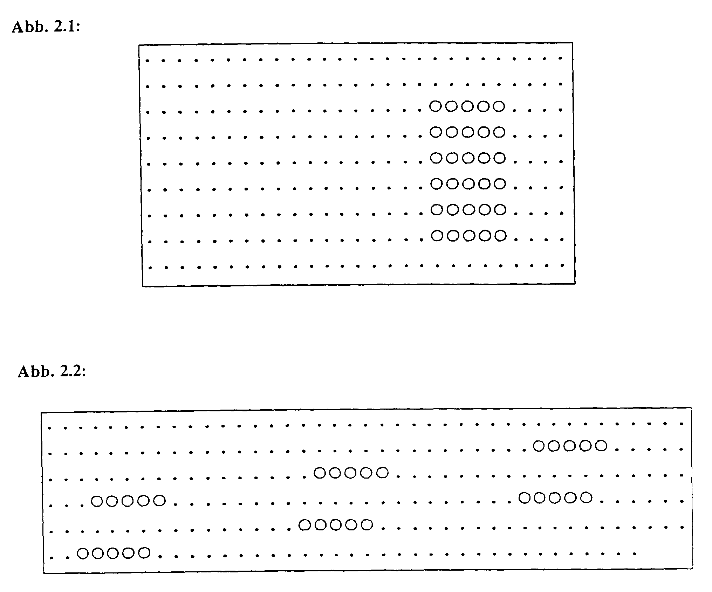

Weiterhin zerstört die Linearisierung von Arrays im Sekundär- und Tertiärspeicher die Nachbarschaftsbeziehung zwischen Arrayelementen, wie Abb. 2 zeigt. Ein Ausschnitt, der auf logischer Ebene ein hohes Maß an Lokalität aufweist, wird auf dem Hintergrundspeicher in einer Art verstreut, die nur den zeilenweisen Zugriff begünstigt und alle anderen Zugriffsarten drastisch benachteiligt. Die Folge ist ein ungenügendes Antwortzeitverhalten.

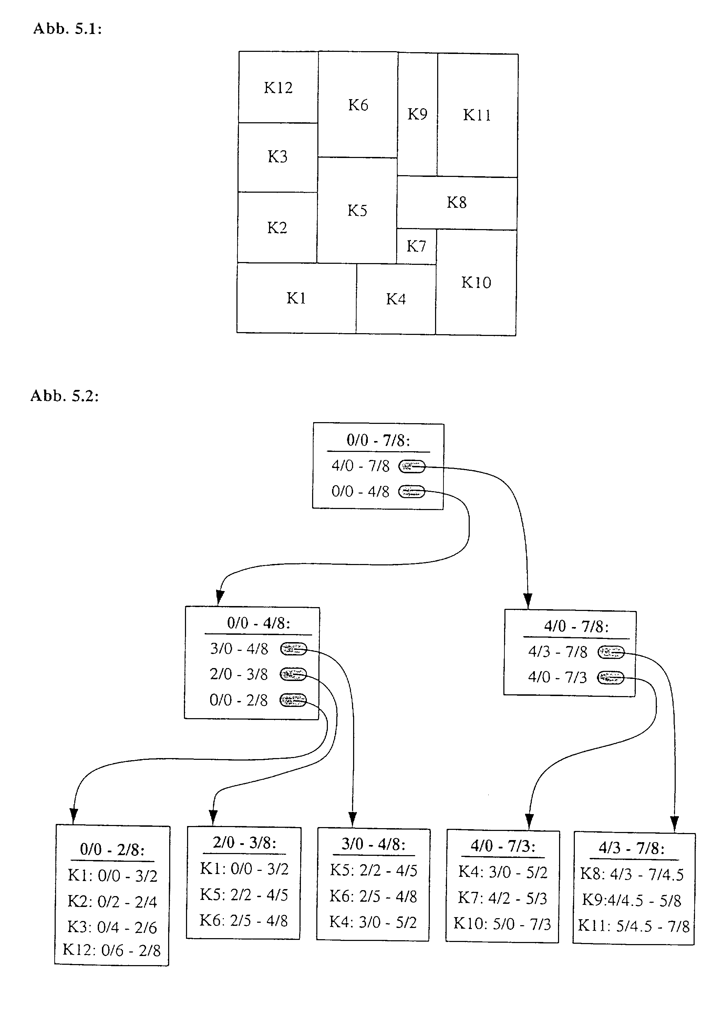

Ein typisches System wird in [MwLW-89] beschrieben: Rasterbilder liegen in der Datenbank als Blobs, codiert in einem von mehreren möglichen Bildaustauschformaten (z.B. TIFF oder GIF); ein zusätzliches Flag zeigt der Anwendung das aktuell verwendete Format an. Das EXTRA/EXCESS-System [VaDe-91] bietet eine Algebra für die Modellierung und Abfrage von Rasterdaten, jedoch keine darauf abgestimmte Speichertechnik, sodaß nur kleine Arrays (z.B. 4x4-Matrizen) effizient verwaltet werden können. Sarawagi und Stonebraker [SaSt-94] haben kürzlich eine Speicherarchitektur für Arrays vorgeschlagen, die auf Kachelung (siehe unten) basiert, aber ohne räumlichen Index zur Zugriffsbeschleunigung und ohne optimierbare Anfrageunterstützung neben der reinen Ausschnittsbildung. In [Baum-94] wird ein Ansatz für die Rasterdatenverwaltung vorgeschlagen, der sowohl die konzeptuelle als auch die physische Ebene behandelt. Eine allgemeine Lösung für das Problem der Datenunabhängigkeit, also der Bearbeitung von Rasterdaten in einer DML bzw. einem API ohne Kenntnis und Bezugnahme auf ihre physische Ablagestruktur, Codierung und Kompression, existiert derzeit nicht. Aus [BAUM 93] ist aber bereits bekannt zusätzlich zu den Daten auch noch einen Indikator der Benutzten Komprimierung zu speichern. In der Bildverarbeitung werden Kachelungstechniken für die Bearbeitung von Bildern verwendet, die aufgrund ihrer Größe nicht als Ganzes in den Hauptspeicher passen (siehe z.B. [Tamu-80]. Eine Kachel ist ein rechteckiger Bildausschnitt. Das Bild wird so in Kacheln zerlegt, daß sich diese nicht überlappen und insgesamt das gesamte Bild überdecken (siehe Abb. 5.1). Innerhalb einer Kachel werden die Daten vermöge eines konventionellen Linearisierungsschemas abgelegt. Kachelung kann vorteilhaft eingesetzt werden, um Nachbarschaft innerhalb eines Arrays auf einem linearen Speichermedium zu simulieren, und bildet daher eine wichtige Grundlage für die vorliegende Erfindung.

Für die Verwaltung geometrischer Daten wie Punkte, Linien und Flächen existiert eine Vielzahl von räumlichen Indizes (Geo-Indizes), um den Zugriff auf derartige Datenelemente in einer Datenbank zu beschleunigen [Guet-94]. In der vorliegenden Erfindung wird ein derartiger Geo-Index zur schnellen Kachelsuche eingesetzt.

### 3 Darstellung der Erfindung

### 3.1 Zu lösende technische Aufgabe

Die vorliegende Erfindung beschreibt ein DBS für Rasterdaten, das folgendes leistet:
- Verwaltung der vollen Semantik von beliebigen Arrays.
- Deklarative Speicherung, Wiedergewinnung und Bearbeitung von Rasterdaten auf der semantischen Ebene von Arrays.
- Datenunabhängigkeit: Die Präsentation von Arraydaten durch das DBS ist explizit von der Anwendung in einer Vielzahl unterschiedlicher Datenformate wählbar, unabhängig vom datenbank-internen Speicherformat, der Codierung und Kompression.
- Eine Speichertechnik, die die effiziente Verwaltung sehr großer Arrays erlaubt, die sich über mehrere, möglicherweise heterogene, Datenträger erstrecken können.
- Speicher- und Anfrageoptimierung.

### 3.2 Vorteilhafte Wirkungen der Erfindung

Ein erfindungsgemäßes DBS ist insbesondere für Raster-Applikationen geeignet, die hohe Anforderungen hinsichtlich Funktionalität, Datenvolumen, Netzwerkfähigkeit und Antwortzeitverhalten stellen. Zu den wichtigsten Anwendungsfeldern zählen verteilte, offene Multimediasysteme, Medizinische Bildverarbeitung/PACS/Krankenhaus-Informationssysteme, geographische und Umwelt-Informationssysteme (GIS/EIS) sowie wissenschaftliche Visualisierung (Maschinenbau, Meteorologie, Hydrologie, Astronomie). Im einzelnen lassen sich folgende Vorteile erzielen:
- Anwendungsneutralität: Die Array-spezifischen Datenstrukturen und Operationen lassen sich beliebig mit konventionellen Definitionen, Ausdrücken und Prädikaten mischen; damit kann ein erfindungsgemäßes DBS in einer Vielzahl von Anwendungsfeldern eingesetzt werden.
- Datenunabhängigkeit: Die DBS-Funktionalität ist auf beliebigen Plattformen und Netzwerken verfügbar und unabhängig von einem speziellen Datenformat oder einer bestimmten Menge von Datenformaten.
- Datenbank-Anwendungsprogrammierer werden von maschinennahen, sich wiederholenden, fehleranfälligen und zeitraubenden Aufgaben befreit, indem vom DBS einheitliche Standard-Lösungen angeboten werden.
- Geringerer Ressourcenverbrauch aufgrund einer angepaßten Speicherarchitektur und einer deklarativen, optimierbaren Anfragesprache; insbesondere hängt das Antwortzeitverhalten vom Anfrageergebnis ab und nicht vom Gesamtdatenvolumen, auf dem die Anfrage ausgeführt wird.
- Transparente Integration von Speichermedien (z.B. Festplatte, Jukebox, Bandarchive) für Datenmengen beliebiger Größe, insbesondere für Arrays, die sich über mehrere Datenträger erstrecken.
- Klassische Datenbankdienste wie Transaktionsunterstützung, Integritätsverwaltung und Recovery werden für Rasterdaten verfügbar.

### 4 Erläuterungen zu den Abbildungen

- **Abb. 1:**: Schematischer Aufbau einer erfindungsgemäßen Anordnung:
Ein oder mehrere Rechner, auf denen Rasterdaten-Anwendungen laufen, sind über ein lokales oder Weitverkehrsnetz mit dem Server verbunden, auf dem das Raster-DBS läuft.
- **Abb. 2:**: Zerstörung der räumlichen Nachbarschaft durch die Linearisierung im Zuge derSpeicherabbildung, gezeigt am Beispiel der Array-Ausschnittsbildung. (Kreise bedeuten durch den Ausschnitt selektierte Zellen, Punkte repräsentieren von der Anfrage nicht erfaßte Zellen.)
- **Abb. 2.1:**: 2-D Bild mit markiertem Ausschnitt (logische Sicht).
- **Abb.2.2:**: Linearisiertes Bild mit verteilten Bestandteilen des selektierten Ausschnitts.

- **Abb. 3:**: Visualisierung der Wirkung von Beispielsanfragen auf Arrays (selektierte Teile schraffiert dargestellt).
- **Abb. 3.1:**: Trimm-Operation, angewendet auf ein 2-D-Array.
- **Abb. 3.2**:: Projektion entlang der x/z-Ebene eines 3-D-Arrays;
das Ergebnis ist ein 2-D-Arrays;
- **Abb. 3.3:**: Projektion entlang der y-Achse eines 3-D-Arrays;
das Ergebnis ist ein 1-D-Array.

- **Abb. 4:**: Erweiterung eines variablen 2-D-Arrays im Zuge einer Zuweisung.

- **Abb. 5:**: Rasterdatenspeicherung mittels einer Kombination von Kachelung und Geo-Index; hier: Beispiel der Abspeicherung eines 2-D-Arrays.
- **Abb. 5.1:**: Zerlegung eines 2-D-Bilds in Kacheln.
- **Abb. 5.2:**: Geo-Index zur Kachel-Zerlegung in Abb. 5.1.

- **Abb. 6:**: Retrieval-Algorithmus als Flußdiagramm.

- **Abb. 7:**: Update-Algorithmus als Flußdiagramm.

- **Abb. 8:**: Systemarchitektur eines erfindungsgemäßen Rasterdatenbanksystems. Die mit Pfeilen markierten internen Schnittstellen eignen sich besonders zum Dazwischenschalten von Netzwerkkommunikation.

### 5 Beschreibung eines Weges zur Ausführung der Erfindung

Die vorliegende Erfindung wird unter Bezugnahme auf eine bestimmte geeignete Ausführung beschrieben. Die Erfindung ist jedoch nicht auf diese Ausführung beschränkt: vielmehr lassen sich viele Variationen und Modifikationen vornehmen, ohne den Bereich der Erfindung zu verlassen, wie er in den unten angegebenen Ansprüchen bzw. deren Äquivalent dargestellt ist.

### 5.1 Raster-Semantik

Im folgenden findet die C++-artige DDL eines objektorientierten DBS Verwendung; für die Beispielsanfragen wird eine SQL-artige DML benutzt. Es ist offensichtlich, wie die dahinterliegenden Konzepte auf andere Modelle und Systeme zu übertragen sind; die Erfindung beschränkt sich in keiner Weise auf eine bestimmte Syntax, Programmiersprache, ein Betriebssystem oder ein bestimmtes Datenbank-Paradigma.

### 5.1.1 Strukturdefinition

Das konzeptuelle Schema wird anhand einer Beispiels-Miniwelt beschrieben, die dem Bereich Sensor-Fusion in Umweltinformationssystemen entstammt. Drei Objektklassen Seismic-Sensor für variabel-lange 1-D-Zeitreihen, LandsatTM für Landsat-TM-Satellitenbilder im Format 7020x5760 (2-D) und WeatherSimulation für atmosphärische Temperaturverteilungen in einem 1000x1000x1000-Bereich (3-D) werden unten definiert; das Symbol # notiert eine variable Anzahl von Zellen in der angegebenen Dimension:

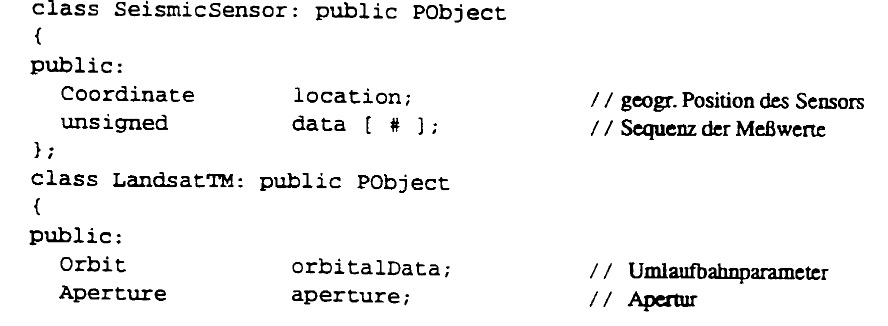

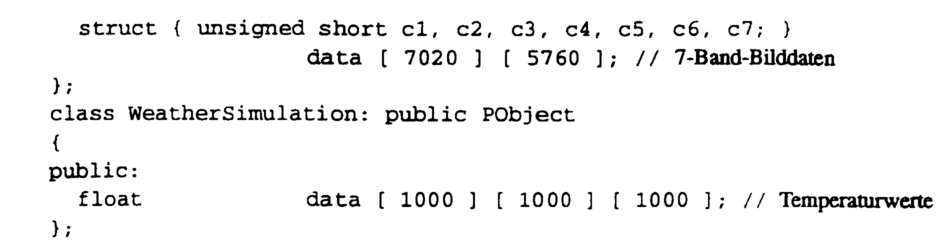

### 5.1.2 Operationen

Die Arrayoperationen lassen sich in wertebasierte Operationen, Änderungsoperationen und allgemeine Konstruktoren einordnen. Folgende wertebasierten Operationen werden vorgeschlagen:

**Konstanten.** Für den Gebrauch in Anfrageausdrücken oder um ein Array zu initialiseren, lassen sich Zellwerte explizit oder implizit angeben. Beispiel: *"Ein 2x2 Ganzzahl-Array, überall mit 0 besetzt."* Dies wird durch eine direkte Auflistung beschrieben, wobei die Arraystruktur angemessen erscheint, hier durch geschweifte Klammern:
{ { 0, 0 }, { 0, 0 } }

Eine implizite Angabe geschieht durch einen deskriptiven Ausdruck der Art
{ 0: [ 1024 ] [ 768 ] } der in diesem Fall bedeutet *"ein 1024 x 768 Bild mit 0 in allen Zellen".*

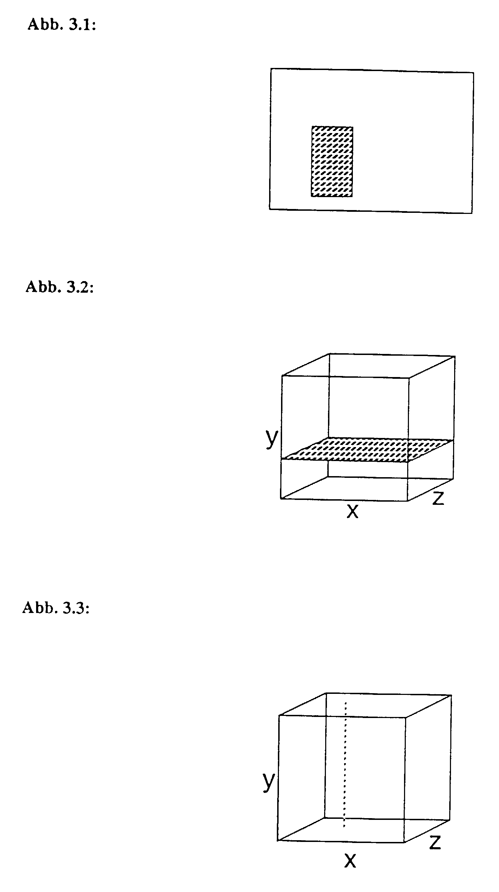

**Trimmen** erzeugt einen rechteckigen Arrayausschnitt. Beispielsweise läßt sich die Anfrage *"der Bildausschnit aller Landsat-TM-Bildern, der durch die Eckpunkte (x0,y0) und (x1,y1 ) festgelegt ist"* (vgl. Abb. 3.1) formulieren als
select 1.data [ x0 .. x1 ] [ y0 .. y1 ]
from LandsatTm l

**Projektion** extrahiert eine Schicht der Dicke 1 aus einem Array (Abb. 3.2). Beispiel: *"Die Lufttemperaturverteilung über dem gesamten Simulationsgebiet in einer Höhe über Grund h"* wird ausgedrückt als
select w.data [ # ] [ h ] [ # ]
from WeatherSimulation w

**Induzierte Operationen**. Für jede auf dem Array-Basistyp verfügbare Operation (z.B. Subtraktion auf Grauwert-Pixeln) wird eine korrespondierende Operation zur Verfügung gestellt, die diese Basisoperation simultan auf alle Arrayzellen anwendet (z.B. Subtraktion zweier Grauwertbilder). Beispiel: *"Den c3-Kanal aller Landsat-TM-Bilder, um den Wert d in der Intensität vermindert":*
select l.data.c3 - d
from LandsatTM l

**Prädikats-Iteratoren**. Das Rasterprädikat some(p) ergibt true genau dann, wenn mindestens eine der Zellen eines Booleschen Arrays p den Wert true enthält. Entsprechend evaluiert all (p) zu true genau dann, wenn alle Zellen von p true enthalten. Beispiel: *"Der Ort aller Seismik-Sensoren, an denen irgendwann in der Vergangenheit die Erdbebenaktivität t überstiegen hat":*
select s.location
from SeismicSensor s
where some( s.data > t )

Als nächstes werden Änderungsoperationen aufgelistet.

**Initialisierung.** Diese Operation, die implizit bei jeder Erzeugung eines Arrays als Teil eines Tupels, eines Objekts o.ä. aufgerufen wird, setzt alle Zellen auf Nullwerte und die Länge variabler Arrays auf 0.

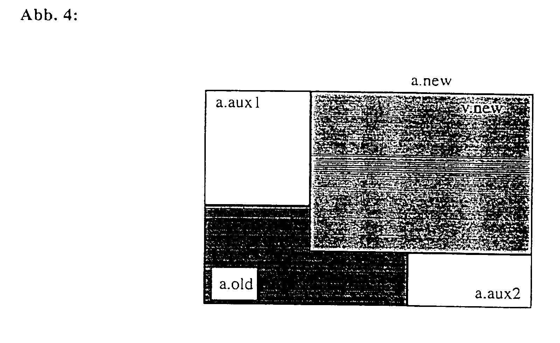

**Zuweisung.** Durch eine Zuweisung erhalten die Zellen in einem Array oder einem Teil eines Arrays neue Werte. Falls das Array variabel ist und die zu besetzenden Zellpositionen nicht alle in dem vorher existierenden Array liegen, wird das Array entsprechend erweitert. Beispielsweise wird in Abb. 4 das existierende Array a.old um den Teil v.new erweitert, der a.old nur teilweise überdeckt. Daher wird als erweitertes Array a.new gebildet. Zwei neu erzeugte Gebiete a.aux1 und a. aux2 dienen zur Erhaltung der Rechteckform und werden mit Nullwerten initialisiert.

Zuletzt werden allgemeine Konstruktionsprinzipien aufgeführt, die für die Flexibilität und Allgemeinheit der Erfindung wesentlich sind.

**Orthogonale Anfragesprache**. Die oben angegebenen Operationen sind vorzugsweise in eine deklarative DML eingebettet, die beschreibt, *was* getan werden soll, und nicht, *wie* es geschehen soll, und damit den Weg für intelligente Optimierung bereitet. Ausdrücke und Prädikate werden (rekursiv) gebildet aus den Array-Basisoperationen, den bekannten Booleschen Operatoren, Klammerung, funktionale Schachtelung sowie u.U. den Aufruf weiterer Funktionen bzw. Methoden.

Beispiel 1: *"Die Temperaturverteilung in der Höhe h von allen Simulationen, bei denen irgendwo in dem durch die Eckpunkte (x0,y0,z0) and (x1,y1,z1) markierten Gebiet die Temperatur t überschritten wird."* Trimmen in drei Dimensionen wird hier kombiniert mit dem induzierten Vergleich und dem Kollabieren in einen einzigen Booleschen Wert durch den some-Operator:
select w.data [ #, h, # ]
from WeatherSimulation w
where some( w.data [ x0 .. x1 ] [ y0 .. y1 ] [ z0 .. z1 ] > t )

Beispiel 2: *"Die Landsat-TM-Bilder, die Regionen mit beobachteter seismischer Aktivität enthalten, sowie die zugehörigen Sensorpositionen ".* Zusätzlich zu den Rasteroperationen finden hier geometrische Operationen area () und contains Verwendung sowie Schachtelung:
select 1.data, s.location
from LandsatTM l, SeismicSensor s
where area (l.orbitalData, l.aperture ) contains s.location
and some( s.data > t )

**Datenunabhängigkeit**. Rasterdaten werden dem Anwendungsprogramm als generische Arrays präsentiert; die Funktionalität, die auf Arrays angeboten wird, ist unabhängig von ihrer physischen Struktur in der Datenbank. Finden keine anderweitigen Festlegungen statt, dann passieren Daten die DBS-Schnittstelle in der Hauptspeicher-Darstellung der Zielmaschine und der Programmiersprache der Applikation, z.B. als C++-Array, sodaß eine unmittelbare Weiterverarbeitung durch die Mittel der Applikations-Programmiersprache möglich ist; diese Repräsentation wird im folgenden die *direkte Darstellung eines Arrays bzgl*. *einer bestimmten Zielumgebung* genannt. Alternativ kann die Datenbankanwendung mittels vom DBS bereitgestellter Funktionen explizit eine andere Darstellung anfordern (z.B. JPEG, um Hardware-Unterstützung auf der Anwendungsseite nutzen zu können). Sämtliche Umwandlung und Kompression bzw. Dekompression, die aufgrund von Unterschieden im DBS-internen Speicherformat und dem für die Anwendung benötigten Format erforderlich werden, erfolgt DBS-intern und für die Anwendung unsichtbar.

Wird z.B. eine TIFF-Codierung angefordert (vorausgesetzt, TIFF ist auf die vorliegende Arraystruktur anwendbar), dann wird die eingebaute Funktion tiff () aufgerufen. Beispiel: *"Alle Landsat-TM-Bilder in TIFF-Format":*
select tiff( LandsatTM.data )

Wie die meisten anderen Bilddatenformate auch, beinhaltet TIFF weitere sogenannte Registrierungsdaten; diese werden vom DBS auf Nullwerte gesetzt.

Im Fall von JPEG muß zusätzlich der Prozentsatz der Qualitätsreduktion angegeben werden, da JPEG mit wählbarer Verlustrate komprimiert :
select jpeg( LandsatTm.data, 25 )

Die datenbank-interne Repräsentation ist der Anwendung nicht bekannt; sie kann, muß aber nicht eines dieser Formate sein. Falls das interne Format nicht dem angeforderten entspricht. erzeugt der Anfrageprozessor den erforderlichen Code zur Umwandlung.

### 5.2 Systemarchitektur

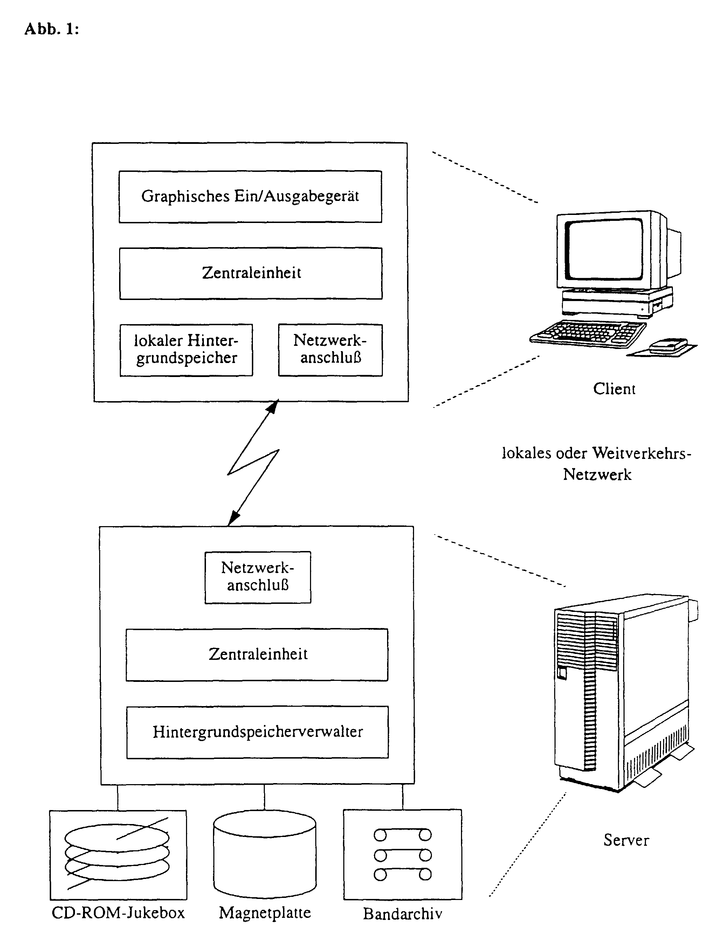

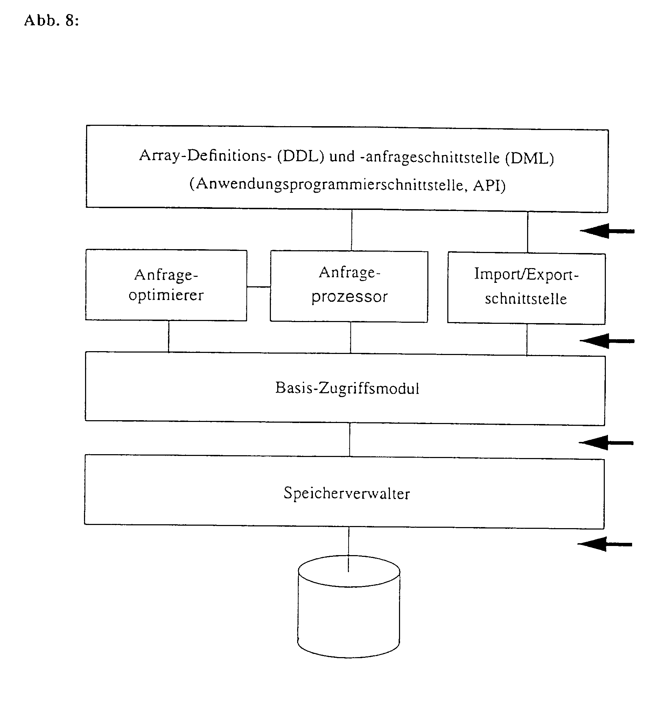

Vorzugsweise wird für ein Raster-DBS eine Hardware-Architektur wie in Abb. 1 und eine Software-Architektur wie in Abb. 8 eingesetzt. Die Anwendungsschnittstelle (API) bietet zwei grundsätzliche Zugriffswege: *Der Anfrageprozessor* erlaubt die Definition und Manipulation von Arrays wie oben beschrieben; insbesondere erstellt er den Plan für die Anfragebearbeitung. Die *Rasterimport- und -exportschnittstelle* dient als Massendaten-Schnittstelle im Fall, daß Arrays als Ganzes ein- oder ausgelagert werden sollen. Dieser Spezialfall des Rasterdatenzugriffs erfordert nur sehr einfache Operationen, aber sehr effiziente Abarbeitung, weswegen er vorteilhaft eigens unterstützt wird. Der *Anfrageoptimierer* versucht, den Abarbeitungsplan so umzustellen, daß verschiedene Dienstqualitäts-Kriterien wie Anzahl der Plattenzugriffe, Kompressions/Dekompressionsaufwand und Netzlast optimiert werden. Das *Basis-Zugriffsmodul* bildet die virtuelle Maschine, auf der der Anfrageprozessor den Abarbeitungsplan ausführt. Hier werden Kacheln geladen, der angeforderte Inhalt wird daraus extrahiert, induzierte Operationen werden ausgeführt und das Anfrageergebenis wird vorbereitet und in das angeforderte Datenformat konvertiert. Der *Speicherverwalter* bearbeitet vollständige Kacheln, für die Schreib- und Leseprimitive angeboten werden. Zur Beschleunigung der Kachelbestimmung wird intern ein Geo-Index mitgeführt.

Innerhalb einer Kachel erfolgt eine konventionelle Linearisierung oder eine beliebige andere Speicherabbildung. Der Speicherverwalter setzt auf einer Schnittstelle auf, die persistente, direkt adressierbare Datenbereiche fester oder variabler Länge und ohne weitere Semantik bietet.

Es ist möglich - allerdings nicht notwendig -, ein konventionelles DBS (z.B. relational oder objektorientiert) unter den Speicherverwalter zu setzen, um Transaktions-, Recovery- und weitere Basismechanismen auszunutzen. In diesem Fall dient das unterliegende DBS als persistenter Speicherverwalter, der Kacheln und/oder Index-Records z-B. in Blobs verwaltet, ohne besondere Kenntnis der Semantik zu besitzen. Beispielsweise kann in einem relationalen DBS eine Relation Tiles definiert sein, die die Kacheln aller Arrays, unabhängig von ihrer Dimension, aufnimmt:
Tiles( oid: integer, tid: integer, c_e: integer, tile: long)

Dabei ist oid der Objektidentifikator des Arrays, tid ist der Kachelidentifikator, in c_e ist die jeweilige Kachelcodierung und -kompression vermerkt, und tile enthält die Kacheldaten selbst.

Man beachte, daß an jeder Stelle in dieser Architektur Netzwerkkommunikation stattfinden kann; insbesondere können Arrayaufbau aus Kacheln bzw. Arrayzerlegung in Kacheln sowie Kompression und Dekompression vom Server zur Applikationsmaschine verlegt werden, wobei jedoch auf strikte Transparenz zu achten ist.

### 5.3 Anfragebearbeitung

Im folgenden wird von einer DML-Spracheinbettung in C und einer vereinfachten API-Funktion dbCall ( ) Gebrauch gemacht, um die Grundprinzipien der Anfragebearbeitung zu erläutern. Um die volle oben beschriebene Funktionalität bereitzustellen, sind aufwendigere Interface-Techniken erforderlich, wie sie zB. in relationalen DBSen Stand der Technik sind. Codierung/Kompression versteht sich immer ausgehend vom Hauptspeicherformat, Decodierung/Dekompression geschieht immer in das Hauptspeicherformat der jeweils benutzten Plattform. Dazu besitzt jedes Array einen Indikator, der sein aktuelles Datenformat angibt. In der Datenbank ist er mit der Kachel abgelegt; am API wird er entweder durch die Applikation explizit gesetzt oder vom Präprozessor implizit im Zuge der Quellcode-Analyse erzeugt.

Für die Beschreibung des Verfahrens wird davon ausgegangen, daß zwischen dem Datenbankserver einerseits und dem Datenbank-API und der Anwendung andererseits Netzwerkkommunikation stattfindet, die bei heterogenen Plattformen eine Übertragungscodierung notwendig macht. Dabei kann zur Verringerung des Kommunikationsaufwands Kompression stattfinden. Die zur Anwendung kommenden Verfahren zur Kompression und das Codierung von Arrays werden nicht weiter spezifiziert, da sie nicht Gegenstand der vorliegenden Erfindung sind; es können beliebige Methoden eingesetzt werden.

Die Kommunikation via Netzwerk kann an der angegebenen Stelle in der Systemarchitektur erfolgen, sie kann ganz entfallen oder sie kann zwischen anderen DBS-Komponenten stattfinden (vgl. die Pfeile in Abb. 8), wobei die Codierung auf den jeweils auftretenden Einheiten (z.B. Kacheln) erfolgen muß.

### 5.3.1 Retrieval

Für die Anfage *"Den Landsat-TM-Ausschnitt zwischen (50,100) und (100,200), davon den Kanal c3"* sei folgendes C-Codestück im Anwendungsprogramm formuliert:

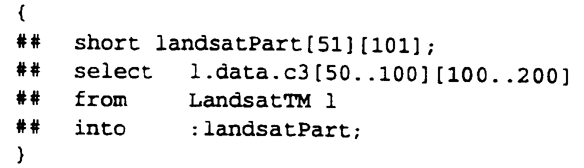

Die zwei Doppelkreuze ## machen die Statements dem Präprozessor bekannt, der aus diesem Quellcode Datenbank-API-Aufrufe generiert. Diese werden um Angaben zum Datenformat ergänzt. Programmvariablen sind hier durch einen vorangestellten Doppelpunkt gekennzeichnet, der vom Präprozessor bei der Codeerzeugung ausgefiltert wird:

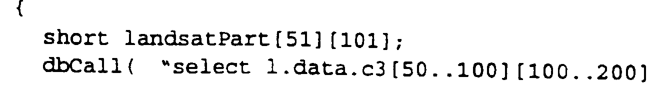

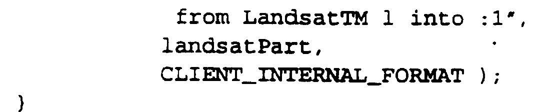

Der erste dbCall () -Parameter ist der Anfragestring, wie er an den Anfrageprozessor übermittelt wird; der Variablenname in der into-Klausel ist ersetzt durch einen Positionsindikator für den ersten (und hier einzigen) Resultatparameter landsatPart. Der zweite Parameter ist ein Zeiger auf das Resultatarray, in das vom API das Anfrageergebnis gestellt wird. Der dritte Parameter signalisiert dem API, ob das Ergebnisarray in der direkten Darstellung der Anwendung (CLIENT_INTERNAL_FORMAT) oder in einem in der Anfrage genauer spezifizierten Datenformat (EXTERNAL_FORMAT) abzuliefern ist; aufgrund des Formatindikators CLIENT_INTERNAL_FORMAT als letztem Parameter wird das API nach erfolgter Anfragebearbeitung durch das DBS das Anfrageergebnis in der Programmvariablen landsatPart in der direkten Darstellung der Applikation bereitzustellen.

Soll das Anfrageergebnis in einem dem DBS bekannten anderen Datenformat geliefert werden, dann macht die Applikation dies durch den Aufruf der zugehörigen Konversionsfunktion bekannt, beispielsweise durch den Aufruf einer Standardfunktion jpeg () zur JPEG-Codierung mit 25% Reduktion:

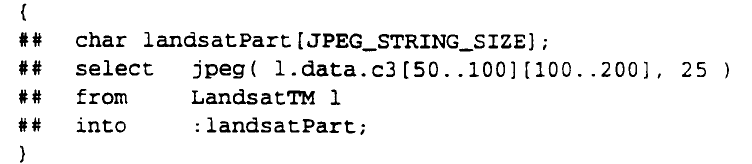

Der Präprozessor generiert daraus

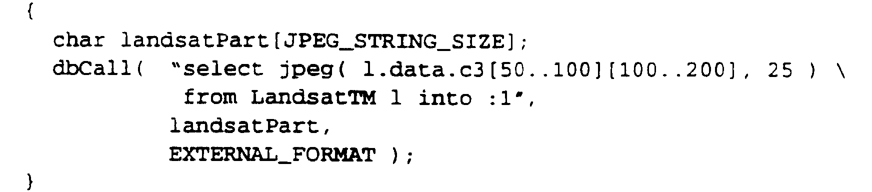

Damit stellt das API das vom Server generierte Array in der Programmvariablen landsat-Part JPEG-codiert bereit.

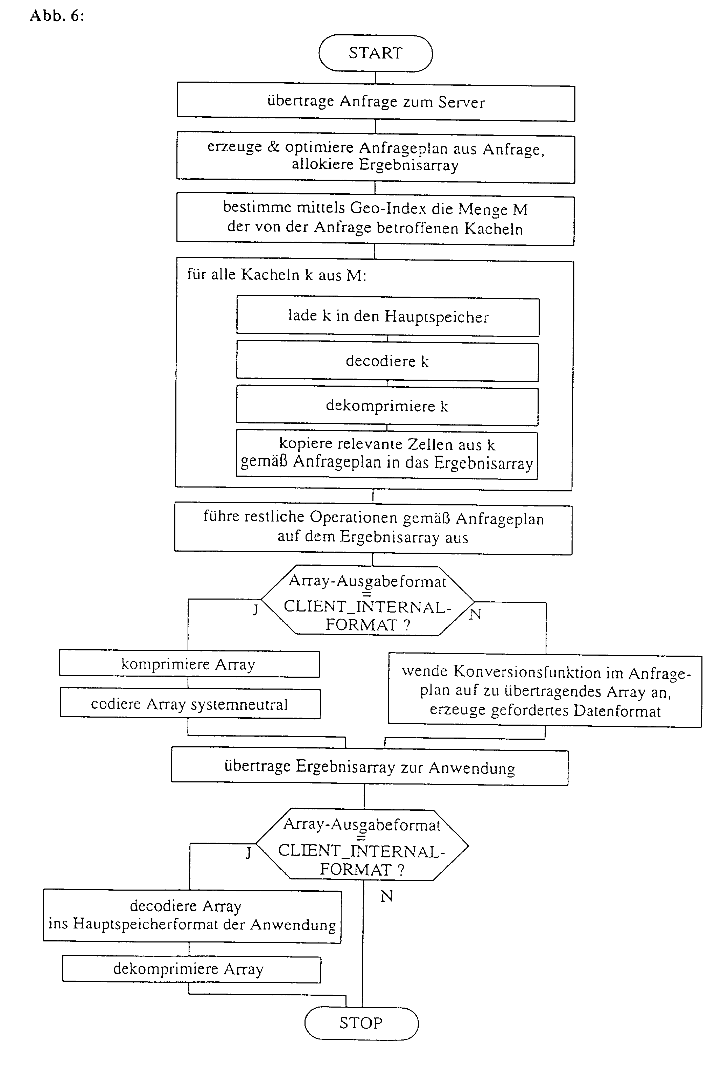

Bei der Ausführung derartiger Datenbankaufrufe erfolgt die weitere Bearbeitung der Anfrage gemäß obiger Architektur nach folgendem Algorithmus (Abb. 6):
*1. übertrage Anfrage zum Server;*
*2. erzeuge und optimiere Anfrageplan aus der Anfrage;*
*3. allokiere das Resultatarray;*
*4. bestimme unter Zuhilfenahme des Geo-Index die M Menge der betroffenen Kacheln;*
*5. für alle Kacheln k*_{*i*} *aus M:*
   *5.1 lade k*_{*i*} *in den Hauptspeicher;*
   *5.2 decodiere k*_{*i*} *gemäß Coderiungsinformation der Kachel;*
   *5.3 dekomprimiere k*_{*i*} *gemäß Coderiungsinformation der Kachel;*
   *5.4 kopiere relevante Zellen aus k*ᵢ *gemäß Anfrageplan in das Resultatarray;*
*6. führe restliche Operationen gemäß Anfrageplan auf dem Ergebnisarray aus;*
*7. falls für das Resultatarray die direkte Darstellung der Anwendung angefordert ist:*
   *7.1 konprimiere das Array;*
   *7.2 codiere das Array;*
*8. tranferiere Resultatarray zur Anwendung;*
*9. falls für das Resultatarray die direkte Darstellung der Anwendung angefordert ist:*
   *9.1 decodiere das Array in das Hauptspeicherformat der Anwendung;*
   *9.2 dekomprimiere das Array;*

In Schritt 1 wird die Anfrage vom Client zum Server übertragen. Im nächsten Schritt wird der Zugriffsplan vom Anfrageprozessor und dem Optimierer erstellt. In Schritt 3 wird im Server der Speicherplatz für das Anfrageergebnis bereitgestellt. Der Speicherverwalter bestimmt in Schritt 4 aus dem Anfrageplan unter Zuhilfenahme des Geo-Index die Menge der betroffenen Kacheln M. Gesteuert vom Anfrageprozessor, lädt das Basis-Zugriffsmodul diese Kacheln der Reihe nach (5.1), expandiert (5.2) und dekomprimiert (5.3) sie in die direkte Darstellung des Servers und kopiert den relevanten Ausschnitt in das Resultatarray (5.3); In den Schritten 5.2 und 5.3 wird die bei jeder Kachel gespeicherte Information, nach welchem Verfahren der Kachelinhalt codiert und komprimiert wurde, verwendet (vgl. Abschnitt 5.2). Eventuelle weitere Anweisungen aus dem select-Teil der Anfrage werden vom Basis-Zugriffsmodul in Schritt 6 ausgeführt; unter anderem zählt dazu eine eventuell von der Anwendung angeforderte Umwandlung des Ergebnisses in ein Format, das von der direkten Darstellung der Anwendung verschieden ist.

Falls das Ergebnisarray in einem solchen Datenformat codiert ist, wird es in allen folgenden Schritten als Bytestring ohne weitere Semantik betrachtet und in Schritt 8 zur Anwendung transferiert, d.h. Schritt 7 und 9 entfallen. Anderenfalls wird das Array, das in der direkten Darstellung des Servers vorliegt, auf der semantischen Ebene des Arrays (also unter Ausnutzung des Strukturwissens) komprimiert und codiert (Schritt 7) und auf der Anwendungsseite im API wieder decodiert und dekomprimiert (Schritt 9). Damit liegt das Ergebnisarray schließlich in dem von der Anwendung angegebenen Speicherbereich entweder in der direkten Darstellung der Applikation oder im sonstigen angeforderten Datenformat vor.

### 5.3.2 Update

Als Beispielsanfrage diene *"Ersetze in allen Landsat-TM-Bildern im Kanal c3 im Bereich zwischen (51,101) und (100,200) die Werte durch das Array e".* Das entsprechende C-Codestück lautet

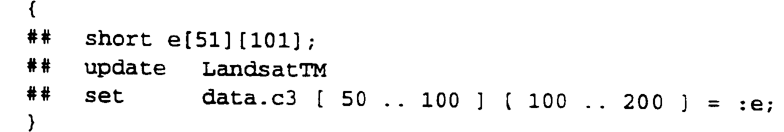

Der Präprozessor erzeugt daraus

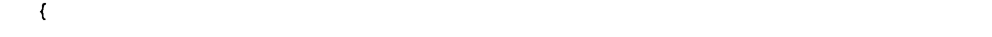

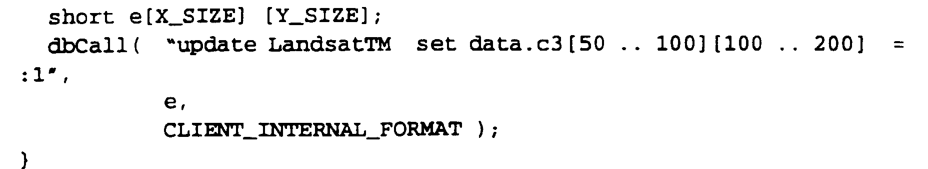

Auf den ersten Parameter mit dem Anfragestring (der Variablenname ist wiederum ersetzt durch einen Positionsindikator) folgt die Programmvariable e mit dem Eingabearray. Aufgrund des Formatindikators CLIENT_INTERNAL_FORMAT als letztem Parameter erwartet das API eine direkte Darstellung der Daten in e.

Liegen die Eingabedaten in einem anderen dem DBS bekannten Format vor, dann macht die Applikation dies durch den Aufruf der zugehörigen Konversionsfunktion bekannt, beispielsweise durch den Aufruf einer Standardfunktion inv_jpeg () zur JPEG-Decodierung: 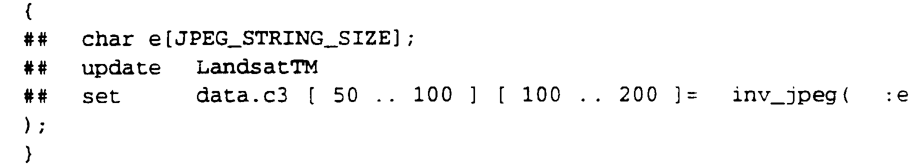 und der Präprozessor generiert daraus

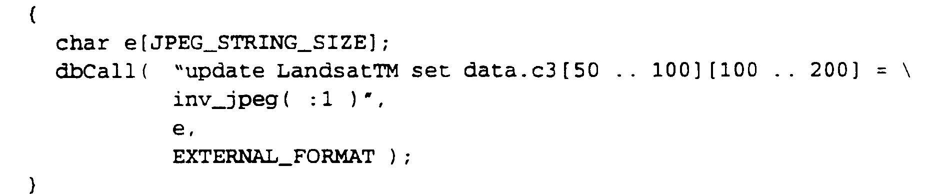

Das API transferiert den Inhalt von e zum Server, sodaß dort ein JPEG-codiertes Array ankommt

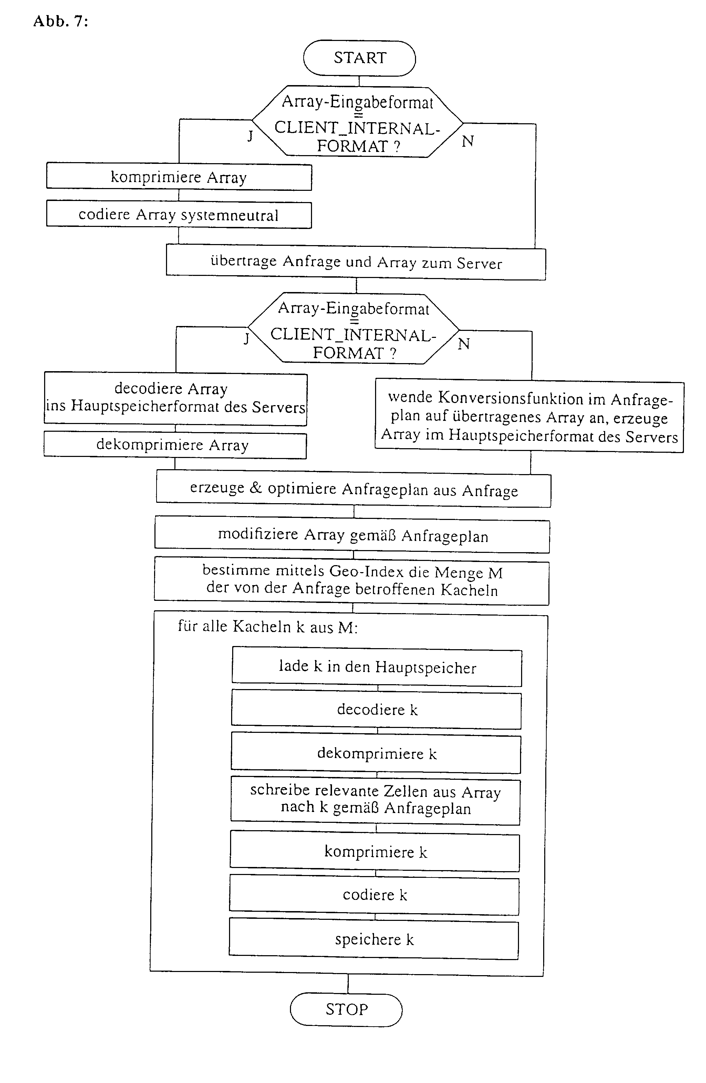

Die weitere Ausführung durch das DBS geschieht gemäß obiger Architektur nach folgendem Algorithmus (vgl. Abb. 7):
*1. falls das Eingabearray in der direkten Darstellung der Anwendung vorliegt:*
   *1.1 komprimiere das Array;*
   *1.2 codiere das Array;*
2. *übertrage Anfrage und Eingabearray zum Server;*
3. *falls das Eingabearray in der direkten Darstellung der Anwendung vorliegt:*
   *3.1 decodiere das Array;*
   *3.2 dekomprimiere das Array;*
4. *erzeuge und optimiere Anfrageplan aus der Anfrage;*
5. *modifiziere Eingabearray gemäß Anfrageplan;*
6. *bestimme mittels Geo-Index die Menge M der betroffenen Kacheln;*
*7. für alle Kacheln k*_{*i*} *aus M:*
   *7.1 lade k*_{*i*} *in den Hauptspeicher;*
   *7.2 decodiere k*_{*i*}*;*
   *7.3 dekomprimiere k*_{*i*}*;*
   *7.4 schreibe relevante Zellen aus dem Eingabearray nach k;*
   *7.5 codiere k*_{*i*}*;*
   *7.6 komprimiere k*_{*i*}*;*
   *7.7 speichere k*_{*i*}*;*

Falls das Eingabearray in der direkten Darstellung der Anwendung vorliegt, wird es in Schritt 1 mittels eines Verfahrens zur Array-Kompression und -Codierung in ein systemneutrales Format konvertiert, in Schritt 2 zusammen mit der Anfrage zum Server übertragen und dort in die direkte Darstellung des Servers übergeführt (Schritt 3.1 und 3.2). Liegt das Eingabearray in einem anderen Format vor, dann wird es beim Transfer als Bytestring ohne weitere Semantik betrachtet und in Schritt 2 zum Server transferiert.

In Schritt 4 wird die Anfrage in den internen Anfrageplan übersetzt und optimiert. Bei seiner Ausführung werden zuerst in Schritt 5 in der Anfrage spezifizierte Modifikationen auf dem Eingabearray vorgenommen; unter anderem wird das Eingabearray, falls es codiert vorliegt, durch Anwendung der in der Anfrage spezifizierten Konversionsfunktion in die direkte Darstellung des Servers übergeführt.

Aus den Trimm-Angaben in der Anfrage bestimmt der Speicherverwalter im Schritt 6 mithilfe des Geo-Index die betroffenen Kacheln, welche im Schritt 7.1 vom Speicherverwalter geladen und an das Basis-Zugriffsmodul übergeben werden. Gesteuert vom Anfrageprozessor, expandiert dieses die Kacheln (Schritt 7.2 und 7.3) abhängig von der Codierungsinformation bei jeder Kachel, aktualisiert die Kacheln mit den relevanten Zellen aus dem expandierten Eingabearray (7.4), führt die Kacheln wieder in das vom Kachelindikator vorgegebene Speicherformat zurück (Schritt 7.5 und 7.6) und übergibt sie schließlich wieder an den Speicherverwalter zum Zurückschreiben in die Datenbank (7.7).

### 6 Erfindungswesentliche Gedanken

1. Ein DBS zur Verwaltung von Arrays. Das DBS kann als eigenständiges System implementiert sein oder als Bestandteil eines anderen DBS.
2. Besagtes DBS mit der Fähigkeit, Arrays
   - mit einer beliebigen Anzahl von Dimensionen
   - einer beliebigen, unter Umständen variablen Anzahl von Zellen pro Dimension
   - über beliebigen Basistypen
   zu verwalten.
3. Logische Ebene:
   - Das DBS besitzt eine DDL zur Strukturdefinition von Arrays.
   - Das DBS besitzt eine DML im herkömmlichen Datenbank-Sinn, die Arrays mittels beliebiger Ausdrücke und Prädikate (evtl. gemischt mit solchen über konventionellen Datentypen) zu bearbeiten erlaubt.
   - Datenunabhängigkeit auf Rasterdaten: Die Präsentation von Arraydaten durch das DBS ist unabhängig vom datenbank-internen Speicherformat, der Codierung und Kompression sowie von Programmiersprache, Betriebssystem und Hardware von Client und Server. Die Applikation kann auswählen, welches Format die Rasterdaten besitzen sollen; zur Auswahl stehen die maschineninterne Hauptspeicherdarstellung in der Applikation sowie eine beliebige Anzahl von Datenaustauschformaten.
4. Physische Ebene:
   - Das DBS verwendet eine Kombination aus n-dimensionaler Kachelungstechnik und einem n-dimensionalen Geo-Index, um eine schnelle und effiziente Verwaltung von Arrays beliebiger Größe und Dimension zu erreichen.
   - Jede Kachel kann individuell auf einem beliebigen Speichermedium abgelegt werden, sodaß das DBS ein Array über eine beliebige Anzahl möglicherweise heterogener Datenträger verteilen kann, ohne daß dies der Anwendung sichtbar wird.
   - Das DBS kann intern eine Vielzahl von Kompressionsverfahren einsetzen, um die Ablage und Übertragung von Rasterdaten zu optimieren, ohne die Kompression/ Dekompression für die Anwendung sichtbar zu machen.
   - Durch einen Indikator, der mit jeder Kachel gespeichert wird, kann die Codierung und Kompression für jede Kachel einzeln festgelegt werden; insbesondere lassen sich verschiedene Kacheln desselben Arrays unterschiedlich behandeln.
   - Jedes Array im Hauptspeicher (beim DBS-Server oder im API auf Client-Seite) besitzt einen Indikator für die Codierung/Kompression, in der es vorliegt; dieser Indikator ist wesentlich, um beliebige Datenformate auf API-Ebene anbieten zu können, also zur Realisierung von Datenunabhängigkeit.
   - Ein Anfrageoptimierer kann, basierend auf der Datendefinition, der Speicherorganisation sowie anderer brauchbarer Information, den Ausführungsplan einer Anfrage nach einer Vielzahl von Methoden so reorganisieren, daß Dienstqualitätskriterien wie CPU-Last, Speicherzugriff, Netzlast und Antwortzeiten optimiert werden.
   - Als mögliche Implementierung können Kacheln auf Attribute eines anderen DBS (z.B. relational oder objektorientiert) dergestalt abgebildet werden, daß jedes Tupel bzw. jedes Objekt eine Kachel enthält (zuzüglich etwaiger Verwaltungsinformation). Damit lassen sich mit beschränktem Aufwand klassische Datenbankeigenschaften wie Transaktionsschutz und Recovery realisieren.

### 7 Literaturreferenzen

[Baum-94]
   P. Baumann: *On the Management of Multidimensional Discrete Data.* VLDB Journal 3(4) 1994, Special Issue on Spatial Databases, pp. 01 - 444
[Guet-94]
   R.H. Gueting: *An Introduction to Spatial Database Systems.* VLDB Journal 3(4) 1994, Special Issue on Spatial Databases, pp. 357 - 400
[MwLW-89]
   K. Meyer-Wegener; W. Lum; C. Wu: *Image Management in a Multimedia Database.* Proc. Working Conference on Visual Databases, Tokyo, Japan, April 1989, Springer 1989, pp. 29 - 40
[SaSt-94]
   S. Sarawagi, M. Stonebraker: *Efficient Organization of Large Multidimensional Arrays.* Proc. 10th Int. Conf. on Data Engineering, February 1994
[Tamu-80]
   H. Tamura: *Image Database Management for Pattern Information Processing Studies.* S. Chang, K. Fu (eds): Pictorial Information Systems, Lecture Notes in Computer Science Vol. 80, Springer 1980, pp. 198 - 227
[VaDe-91]
   S. Vandenberg, D. DeWitt: *Algebraic Support for Complex Objects with Arrays, Identity, and Inheritance.* Proc. ACM SIGMOD Conf. 1991, pp. 158 - 167
[BAUM 93]
   P. BAUMANN : *Database Support for Multidimensional discrete data*. ISBN 3-540-56869-7, pp. 191-206.

## Patentansprüche

1. Datenbanksystem mit
- einer Speichereinrichtung zum Speichern von codierten und/oder komprimierten multidimensionalen Arraydaten,
- einer Speicherschnittstelle,
- einer Anwendungsprogrammierschnittstelle und
- einer Verarbeitungseinrichtung zum Durchführen einer Abspeicherungs- und Abfrageverarbeitung und zum Bereitstellen verarbeiteter Daten an die Speicherschnittstelle oder die Anwendungsprogrammierschnittstelle, umfassend einen Codierer/Decodierer, einen Komprimierer/Dekomprimierer, einen Anfrageprozessor, einen Anfrageoptimierer und einen Formatkonvertierer,
wobei das Datenbanksystem dadurch gekennzeichnet ist, daß
- das Bereitstellen von zu speichernden Daten an die Speicherschnittstelle durch die Verarbeitungseinrichtung in einem durch einen den Daten zugeordneten Indikator vorgegebenen Speicherformat erfolgt,
- das Bereitstellen von auszugebenden Daten an die Anwendungsprogrammierschnittstelle durch die Verarbeitungseinrichtung in einem durch einen über die Anwendungsprogrammierschnittstelle übermittelten Indikator vorgegebenen Ausgabeformat erfolgt und
- das Speicherformat und das Ausgabeformat sowie ein vorgegebenes internes Format der Verarbeitungseinrichtung für das Bearbeiten der Daten jeweils unabhängig voneinander sind.

2. Datenbanksystem nach Anspruch 1, wobei das Bereitstellen an die Anwendungsprogrammierschnittstelle wahlweise in einem zur unmittelbaren Weiterverarbeitung durch eine Anwendung geeigneten Ausgabeformat oder einem über die Anwendungsprogrammierschnittstelle beliebig wählbaren Ausgabeformat erfolgt.

3. Datenbanksystem nach Anspruch 1 oder 2, wobei die Eingabe von Arraydaten über die Anwendungsprogrammierschnittstelle in einem beliebigen Datenformat erfolgt.

4. Datenbanksystem nach einem der Ansprüche 1 bis 3, wobei die Anwendungsprogrammierschnittstelle eine deklarative Schnittstelle zur Definition, Abspeicherung, Änderung und Wiedergewinnung von Arrays beinhaltet.

5. Datenbanksystem nach einem der Ansprüche 1 bis 4, wobei die Speichereinrichtung einen Speicherverwalter umfaßt.

6. Verfahren zum Verarbeiten multidimensionaler Arraydaten in einem Datenbanksystem nach einem der Ansprüche 1 bis 5 mit den folgenden Schritten:
1. Übertragen eines über eine Anwendungsprogrammierschnittstelle eingegebenen Arrays und einer eingegebenen Anfrage an eine Verarbeitungseinheit;
2. Erzeugen und Optimieren eines Anfrageplanes aus der eingegebenen Anfrage;
3. Modifizieren des Eingabearrays gemäß dem Anfrageplan und Umwandeln des Eingabearrays in ein vorgegebenes internes Format der Verarbeitungseinheit;
4. Ermitteln von durch den Anfrageplan betroffenen Arraydaten oder Array-Teildaten, die in einer Speichereinrichtung des Datenbanksystems abgespeichert sind;
5. Laden in die Verarbeitungseinrichtung, Decodieren und Dekomprimieren der ermittelten Arraydaten oder Array-Teildaten gemäß einem den Daten zugeordneten Indikator, Erzeugen geänderter Arraydaten oder Array-Teildaten aus den Daten des eingegebenen Arrays;
6. Umwandeln der überschriebenen Arraydaten oder Array-Teildaten in ein durch einen den Daten zugeordneten Indikator vorgegebenes Speicherformat und Übertragen der Daten an eine Speicherschnittstelle.

7. Verfahren nach Anspruch 6, wobei die Arrays unter Zuordnung eines Indexes in Array-Teildaten unterteilt in der Speichereinrichtung abgespeichert sind und wobei die Ermittlung der betroffenen Arraydaten oder Array-Teildaten in Schritt 4 anhand des Indexes erfolgt.

8. Verfahren nach Anspruch 7, wobei das Komprimieren und Codieren von Array-Teildaten eines Arrays unabhängig voneinander erfolgt.

9. Verfahren zum Verarbeiten multidimensionaler Arraydaten in einem Datenbanksystem nach einem der Ansprüche 1 bis 5 mit den folgenden Schritten:
1. Übertragen einer über eine Anwendungsprogrammierschnittstelle eingegebenen Anfrage an eine Verarbeitungseinheit;
2. Erzeugen und Optimieren eines Anfrageplans auf der Grundlage der eingegebenen Anfrage;
3. Allokieren von Speicherplatz für durch die Anfrage gewonnene Resultatarrays;
4. Ermitteln von durch den Anfrageplan betroffenen Arraydaten oder Array-Teildaten, die in einer Speichereinrichtung des Datenbanksystems abgespeichert sind;
5. Laden in die Verarbeitungseinrichtung, Umwandeln der ermittelten Arraydaten oder Array-Teildaten aus dem durch einen den Daten zugeordneten Indikator vorgegebenen Speicherformat in ein vorgegebenes internes Format der Verarbeitungseinheit, Kopieren von relevanten Array-Teildaten in das Resultatarray gemäß dem Anfrageplan;
6. Ausführen weiterer Operationen gemäß dem Anfrageplan;
7. Umwandeln der Resultatarraydaten in ein durch einen über die Anwendungsprogrammierschnittstelle übermittelten Indikator vorgegebenes Ausgabeformat, falls dieses Ausgabeformat von dem internen Datenformat abweicht;
8. Übermitteln des Resultatarrays an die Anwendungsprogrammierschnittstelle.

10. Verfahren nach Anspruch 9, wobei Schritt 7 das Komprimieren und Codieren der Resultatarraydaten umfaßt.

11. Verfahren nach Anspruch 9 oder 10, wobei die Arrays unter Zuordnung eines Indexes in Array-Teildaten unterteilt in der Speichereinrichtung abgespeichert sind und wobei die Ermittlung der betroffenen Arraydaten oder Array-Teildaten in Schritt 4 anhand des Indexes erfolgt.

12. Verfahren nach Anspruch 7 oder 11, wobei die Array-Teildaten Kacheln sind.

13. Verfahren nach einem der Ansprüche 7, 11 oder 12, wobei der Index ein Geo-Index ist.

## Claims

1. Database system comprising
- storage means for storing encoded and/or compressed multidimensional array data,
- a storage interface,
- an application programming interface and
- processing means for effecting a storage and query processing and for providing processed data to the storage interface or the application programming interface, comprising an encoder/decoder, a compressor/decompressor, a query processor, a query optimizer and a format converter,
wherein the database system is characterized in that
- the provision of to be stored data to the storage interface through the processing means takes place in a storage format predetermined by an indicator assigned to the data,
- the provision of to be output data to the application programming interface through the processing means takes place in an output format predetermined by an indicator transmitted via the application programming interface, and
- the storage format and the output format as well as a predetermined internal format of the processing means for the processing of the data are respectively independent from one another.

2. Database system according to claim 1, wherein the provision to the application programming interface takes place selectively in an output format suitable for direct further processing by an application, or an output format arbitrarily selectable through the application programming interface.

3. Database system according to claim 1 or claim 2, wherein the input of array data takes place via the application programming interface in an arbitrary data format.

4. Database system according to any one of claims 1 to 3, wherein the application programming interface comprises a declarative interface for definition, storage, modification and retrieval of arrays.

5. Database system according to any one of claims 1 to 4, wherein the storage means comprise a storage manager.

6. Method for processing multidimensional array data in a database system according to any one of claims 1 to 5, comprising the following steps:
1. Transmission of an array input via an application programming interface and an input query to a processing unit;
2. generation and optimization of a query plan from the input query;
3. modification of the input array according to the query plan and translation of the input array into a predetermined internal format of the processing unit;
4. determination of array data or array partial data affected by the query plan, which are stored in storage means of the database system;
5. loading into the processing means, decoding and decompression of the determined array data or array partial data according to an indicator assigned to the data, generation of modified array data or array partial data from the data of the input array;
6. translation of overwritten array data or array partial data into a storage format predetermined by an indicator assigned to the data and transfer of the data to a storage interface.

7. Method according to claim 6, wherein the arrays are stored in the storage means divided into array partial data with assignment of an index, and wherein the determining of the affected array data or array partial data in step 4 takes place by means of the index.

8. Method according to claim 7, wherein the compression and encoding of array partial data of an array takes place independently from one another.

9. Method for processing multidimensional array data in a database system according to any one of claims 1 to 5, comprising the following steps:
1. Transmission of a query input through an application programming interface to a processing unit;
2. generation and optimization of a query plan on the basis of the input query;
3. allocation of storage place for the result array obtained by the query;
4. determining the array data or array partial data affected by the query plan, which are stored in storage means of the database system;
5. loading into the processing means, translation of the determined array data or array partial data from the storage format predetermined by the indicator assigned to the data into a predetermined internal format of the processing unit, copying of relevant array partial data into the result array according to the query plan;
6. effecting further operations according to the query plan;
7. translation of result array data into an output format predetermined by an indicator transmitted via the application programming interface, in case this output format differs from the internal data format;
8. transmission of the result arrays to the application programming interface.

10. Method according to claim 9, wherein step 7 comprises the compression and encoding of the result array data.

11. Method according to claim 9 or claim 10, wherein the arrays are stored in the storage means divided into array partial data with assignment of an index, and wherein the determination of the affected array data or array partial data in step 4 takes place by means of the index.

12. Method according to claim 7 or claim 11, wherein the array partial data are tiles.

13. Method according to any one of claims 7, 11 or 12, wherein the index is a spatial index (geo-index).

## Revendications

1. Système de banque de données comprenant
- un dispositif de mémoire pour l'enregistrement de données de matrices multidimensionnelles codées et/ou compressées,
- une interface de mémoire,
- une interface de programmation applicative et
- un dispositif de traitement destiné à l'exécution des enregistrements et des traitements d'interrogations et à la mise à disposition de données traitées au niveau de l'interface de mémoire ou de 1' interface de programmation applicative, comprenant un codeur-décodeur, un système d e compression-décompression, un processeur d'interrogations, u n système d'optimisation des interrogations et un convertisseur de format,
caractérisé en ce que
- la mise à disposition de données à enregistrer au niveau de l'interface de mémoire par le dispositif de traitement est effectuée sous un format d'enregistrement prédéterminé par un indicateur affecté aux données,
- la mise à disposition de données en sortie au niveau de l'interface de programmation applicative par le dispositif de traitement est effectuée sous un format de sortie déterminé par un indicateur transmis par l'interface de programmation applicative et
- le format d'enregistrement et le format de sortie ainsi qu'un format interne prédéterminé du dispositif de traitement pour le traitement des données sont indépendants les uns des autres.

2. Système de banque de données selon la revendication 1, caractérisé en ce que la mise à disposition au niveau de l'interface de programmation applicative est effectuée au choix sous un format de sortie permettant le retraitement immédiat par une application ou sous un format de sortie pouvant être déterminé au choix par l'interface de programmation applicative.

3. Système de banque de données selon la revendication 1 ou 2, caractérisé en ce que la saisie des données de matrice par l'interface de programmation applicative est effectuée sous n'importe quel format de données.

4. Système de banque de données selon l'une ou l'ensemble des revendications 1 à 3, caractérisé en ce que l'interface de programmation applicative contient une interface déclarative pour la définition, l'enregistrement, la modification et la récupération des matrices.

5. Système de banque de données selon l'une ou l'ensemble des revendications 1 à 4, caractérisé en ce que le dispositif de mémoire comprend un gestionnaire de mémoire.

6. Procédé de traitement de données de matrice multidimensionnelles dans un système de banque de données selon l'une ou l'ensemble des revendications 1 à 5, comportant les étapes suivantes :
1. transmission d'une matrice saisie et d'une interrogation saisie à une unité de traitement par une interface de programmation applicative ;
2. génération et optimisation d'un plan d'interrogation à partir de l'interrogation saisie ;
3. modification de la matrice de saisie selon le plan d'interrogation et conversion de la matrice de saisie dans un format prédéterminé interne à l'unité de traitement ;
4. détermination des données de matrice ou des parties de données de matrice concernées par le plan d'interrogation qui sont enregistrées dans le dispositif de mémoire du système de banque de données ;
5. chargement dans le dispositif de traitement, décodage et décompression des données de matrice ou parties de données de matrice déterminées selon un indicateur affecté aux données, génération de données de matrice ou parties de données de matrice modifiées à partir des données de la matrice saisie ;
6. conversion des données de matrice ou parties de données de matrice modifiées sous un format d'enregistrement prédéterminé par un indicateur affecté aux données et transmission des données à une interface de mémoire.

7. Procédé selon la revendication 6, caractérisé en ce que les matrices sont enregistrées dans le dispositif de mémoire après fractionnement en parties de données de matrice avec affectation d'un indice, et en ce que la détermination des données de matrice ou parties de données de matrice concernées est effectuée à l'étape 4 à l'aide de l'indice.

8. Procédé selon la revendication 7, caractérisé en ce que la compression et le codage des parties de données d'une matrice se font indépendamment l'un de l'autre.

9. Procédé de traitement de données de matrice multidimensionnelles dans un système de banque de données selon l'une ou l'ensemble des revendications 1 à 5, comportant les étapes suivantes :
1. transmission d'une interrogation saisie à une unité de traitement par une interface de programmation applicative ;
2. génération et optimisation d'un plan d'interrogation à partir de l'interrogation saisie ;
3. allocation d'espace de mémoire pour la matrice de résultats obtenue à partir de l'interrogation ;
4. détermination des données de matrice ou des parties de données de matrice concernées par le plan d'interrogation qui sont enregistrées dans le dispositif de mémoire du système de banque de données ;
5. chargement dans le dispositif de traitement, conversion des données de matrice ou parties de données de matrice du format d'enregistrement prédéterminé par un indicateur associé aux données à un format prédéterminé interne à l'unité de traitement, copie des parties de données de matrice pertinentes dans la matrice de résultat selon le plan d'interrogation ;
6. exécution d'autres opérations selon le plan d'interrogation ;
7. conversion des données de la matrice de résultat en un format de sortie prédéterminé par un indicateur transmis par l'interface de programmation applicative, si ce format de sortie est différent du format interne des données ;
8. transmission des résultats à l'interface de programmation applicative.

10. Procédé selon la revendication 9, caractérisé en ce que l'étape 7 comprend la compression et le codage des données de matrice de résultat.

11. Procédé selon la revendication 9 ou 10, caractérisé en ce que les matrices sont enregistrées dans le dispositif de mémoire après fractionnement en parties de données de matrice avec affectation d'un indice, et en ce que la détermination des données de matrice ou parties de données de matrice concernées est effectuée à l'étape 4 à l'aide de l'indice.

12. Procédé selon la revendication 7 ou 11, caractérisé en ce que les parties de données de matrice sont des carreaux.

13. Procédé selon l'une ou l'ensemble des revendications 7, 11 ou 12, caractérisé en ce que l'indice est un indice géographique.
